# EUROPÄISCHE PATENTSCHRIFT

(11) **EP 2 058 174 B1**
(45) Veröffentlichungstag und Bekanntmachung des Hinweises auf die Patenterteilung: **22.12.2010**
(21) Anmeldenummer: 07120245.1
(22) Anmeldetag: 08.11.2007
(51) Int. Cl.: B60Q 1/12, B60Q 1/18

(54) **Verfahren zur Steuerung eines Abbiegelichtes eines Kraftfahrzeuges**
Method for actuating the bending light of a motor vehicle
Procédé destiné à la commande d'un feu de virage d'un véhicule automobile

(43) Veröffentlichungstag der Anmeldung: 13.05.2009
(73) Patentinhaber: Hella KGaA Hueck & Co., 59552 Lippstadt (DE)
(72) Erfinder: Willeke, Franz-Georg, 59609 Anröchte (DE)

(56) Entgegenhaltungen:
- EP-A- 1 285 811
- DE-A1- 10 139 152
- DE-A1- 10 147 584
- DE-A1- 10 335 293
- DE-A1- 19 719 573
- DE-A1-102004 047 685

## Beschreibung

Die vorliegende Erfindung betrifft ein Verfahren sowie eine Vorrichtung zur Ausführung des Verfahrens zur Steuerung eines Abbiegelichtes eines Kraftfahrzeugs, das durch ein Einschaltsignal eingeschaltet und durch ein Ausschaltsignal wieder ausgeschaltet wird, wobei eine Steuereinheit zur Steuerung des Ein- und Ausschaltzustandes des Abbiegelichtes vorgesehen ist.

Ein gattungsgemäßes Abbiegelicht ist aus der DE 197 19 573 A1 bekannt. Hierin wird ein statisches Abbiegelicht vorgeschlagen, welches als bekanntes Nebellicht ausgeführt sein kann. Das Fahrzeug weist gewöhnlich einen linken sowie einen rechten Nebelscheinwerfer auf, sodass dann, wenn das Fahrzeug eine Geschwindigkeit unterschreitet, bei Kurveneinschlag der Lenkung das Kurveninnere Nebellicht als Abbiegelicht dem Abblendlicht zugeschaltet wird. Damit erhöht sich der horizontale Leuchtbereich, sodass dem Fahrer des Kraftfahrzeugs eine bessere Sicht in Richtung der Kurve ermöglicht ist. Ein statisches Abbiegelicht ist unbeweglich im Frontbereich des Fahrzeugs integriert und wird bei Kurvenfahrt lediglich zu- und wieder abgeschaltet. Ein dynamisches Kurvenlicht hingegen kann aus den gewöhnlichen Frontscheinwerfern des Kraftfahrzeugs gebildet werden, welche sich bei Kurvenfahrt aus der Längsachse des Fahrzeugs heraus in die Kurve hinein verdrehen. Folglich wandert der Lichtkegel in das Kurveninnere hinein, sodass dem Fahrer des Kraftfahrzeugs eine verbesserte Sicht in Kurvenfahrtrichtung ermöglicht ist. Das statische und das dynamische Abbiegelicht kann auch in Kombination an einem Kraftfahrzeug vorgesehen werden, um im Ergebnis die Fahrsicherheit für den Fahrer des Kraftfahrzeugs weiter zu erhöhen.

Das statische Abbiegelicht erfordert zumindest an der linken und rechten Vorderseite des Kraftfahrzeugs eine Scheinwerferanordnung, welche bei Einleitung der Kurvenfahrt eingeschaltet wird. Dabei ist vorgesehen, bei einer Linkskurve die linke vordere Scheinwerferanordnung und bei einer Rechtskurve die rechte vordere Scheinwerferanordnung einzuschalten. Das Einschaltsignal kann durch eine gerichtete Aktion durch den Fahrer oder durch eine Sensorik im Kraftfahrzeug aktiviert werden. Die gerichtete Aktion durch den Fahrer kann beispielsweise das Setzen eines Blinkers darstellen, wobei bei einem selbsttätigen Einschaltsignal beispielsweise eine Sensorik mit der Lenkung des Kraftfahrzeugs verbunden sein kann, um bei Lenkeinschlag das Einschaltsignal an die Steuereinheit zur Aktivierung der Scheinwerferanordnung zu geben.

Die Scheinwerferanordnung zur Emittierung des Abbiegelichtes kann entweder als separater Scheinwerfer im Frontbereich des Fahrzeugs linksseitig und rechtsseitig integriert oder durch eine getrennte Ansteuerung eines bereits vorhandenen Nebelscheinwerfers am Kraftfahrzeug dargestellt werden. Die Nebelscheinwerfer sind entweder unterhalb des Hauptscheinwerfers oder in diesem integriert vorgesehen, wobei zur Umsetzung eines Kurvenlichts auch eine weitere Scheinwerferanordnung mit einem verstärkt seitlichen Abstrahlwinkel vorgesehen werden kann. Scheinwerferanordnungen, welche als Abbiegelicht dienen, weisen häufig sehr kleine Abmessungen auf, wobei eine große Leuchtkraft gefordert ist. Aufgrund der verwendeten Materialien und der vergleichsweise großen Leuchtkraft ist bei Aktivierung des Abbiegelichtes ein großer Energieeintrag in die Scheinwerferanordnung festzustellen, sodass bei dauerhaftem Betrieb die Materialien Schaden nehmen können. Insbesondere müssen gesetzliche Vorschriften eingehalten werden, durch welche beispielsweise die prozentuale Einschaltdauer der Scheinwerferanordnung zur Emittierung eines Abbiegelichtes begrenzt ist (SAE-Anforderung). Die gesetzlichen Vorgaben erfordern eine erweiterte Steuerung des Abbiegelichtes eines Kraftfahrzeugs, welche verhindert, dass die SAE-Anforderungen nicht erfüllt werden oder dass die Scheinwerferanordnung Schaden nimmt. Jedoch ergibt sich das Problem, dass beispielsweise bei längerer Fahrt mit häufigen Kurven und prozentual großem Einschaltanteil des Abbiegelichtes ein selbsttätiges Ausschalten des Abbiegelichtes durch die Steuerung unvorteilhaft ist, da dem Fahrer des Kraftfahrzeugs das Abbiegelicht nachfolgend nicht weiter zur Verfügung stünde. Daher ist eine Weiterbildung der Steuerung eines Abbiegelichtes eines Kraftfahrzeugs gefordert, welche auch bei langem oder dauerhaftem Betrieb des Kraftfahrzeugs bei gleichzeitiger Einhaltung der SAE-Anforderungen und einer Vermeidung der Schädigung der Scheinwerferanordnung zur Bereitstellung des Abbiegelichtes das Abbiegelicht dauerhaft bereitstellt.

DE 10 2004 047 685 A1 offenbart ein Verfahren zum Steuern von einer Fahrzeuglichtquelle, wobei die Einschaltdauer erfasst wird und wobei daraus die Temperatur der Fahrzeuglichtquelle unter Verwendung eines Modelles geschätzt wird. Falls die berechnete Temperatur einen grenzwert übersteigt, wird die Intensität der Lichtemission zumindest reduziert, um eine Schädigung eines Fahrzeugsbauteil durch eine höhe Temperatur zu vermeiden.

Es ist daher die Aufgabe der vorliegenden Erfindung, ein Verfahren zur Steuerung eines Abbiegelichtes für ein Kraftfahrzeug bereitzustellen, welches einen langen oder dauerhaften Betrieb des Abbiegelichtes bei gleichzeitiger Einhaltung einer maximalen Einschaltdauer ermöglicht.

Diese Aufgabe wird ausgehend von einem Verfahren zur Steuerung eines Abbiegelichtes eines Kraftfahrzeugs gemäß dem Oberbegriff des Anspruchs 1 in Verbindung mit den kennzeichnenden Merkmalen gelöst. Ferner wird eine Vorrichtung zur Steuerung eines Abbiegelichtes gemäß dem Oberbegriff des Anspruchs 12 in Verbindung mit den kennzeichnenden Merkmalen zur Lösung der Aufgabe vorgeschlagen. Vorteilhafte Weiterbildungen der Erfindung sind in den abhängigen Ansprüchen angegeben.

Die Erfindung schließt die technische Lehre ein, dass der Steuereinheit ein sich periodisch wiederholendes Zeitintervall (T) und eine maximale Einschaltdauer (t_{EIN}) des Abbiegelichtes innerhalb des Zeitintervalls (T) vorgegeben wird, wobei die Steuereinheit bei Erreichen der maximalen Einschaltdauer (t_{EIN}) das Abbiegelicht vor dem Zeitpunkt des Ausschaltsignals zumindest auf eine Teilleistung reduziert.

Die Erfindung geht dabei von dem Gedanken aus, der Steuereinheit ein sich periodisch wiederholendes Zeitintervall vorzugeben, innerhalb dessen die Einschaltdauer des Abbiegelichtes begrenzt werden kann. Ist das Zeitintervall abgelaufen, so wird der Zeitspeicher zur Speicherung der bereits summarisch aufaddierten Einschaltdauer gelöscht, sodass die Messung der Einschaltdauer erneut beginnt. Der Beginn des ersten Zeitintervalls kann mit Inbetriebnahme des Kraftfahrzeugs oder beispielsweise mit Einschalten des Abblendlichts gestartet werden und läuft während der Betriebsdauer des Kraftfahrzeugs kontinuierlich weiter. Folglich kann eine Überschreitung der maximalen Einschaltdauer des Abbiegelichtes vermieden werden, ohne das Abbiegelicht dauerhaft außer Betrieb zu setzen. Damit wird effektiv eine Schädigung der Scheinwerferanordnung zur Bereitstellung des Abbiegelichtes vermieden, da bei Begrenzung der Einschaldauer auch der Energieeintrag in die Scheinwerferanordnung begrenzt ist und eine Temperaturüberhöhung vermieden wird. Insbesondere kann den gesetzlichen Spezifikationen Rechnung getragen werden, welche eine maximale Einschaltdauer eines Abbiegelichtes fordern.

Vorzugsweise wird das sich periodisch wiederholende Zeitintervall (T) mit einer Zeitdauer von 4 min bis 15 min, vorzugsweise von 5 min bis 10 min und besonders bevorzugt von 7,5 min in der Steuereinheit vorgegeben. Die Einschaltdauer (t_{EIN}) kann mit einer Zeitdauer von 0,5 min bis 3,5 min, vorzugsweise von 1 min bis 2,5 min und besonders bevorzugt von 1,5 min in die Steuereinheit vorgegeben werden. Mittels eines sich periodisch wiederholenden Zeitintervalls (T) von 7,5 min und einer innerhalb des Zeitintervalls (T) liegenden maximalen Einschaltdauer (t_{EIN}) von 1,5 min kann die SAE-Spezifikation erfüllt werden, nämlich dass innerhalb einer Zeitdauer von 15 min das Abbiegelicht maximal 3 min eingeschaltet bleibt.

Mit Beginn des Zeitintervalls (T) beginnt die summarische Messung der Einschaltdauer (t_{EIN}), welche aus einer Vielzahl von kleinen Einschaltdauern gebildet werden kann. Sobald eine Summe von 1,5 min Einschaltdauer (t_{EIN}) gemessen wurde, verhindert die Steuerung bei einem weiteren Einschaltsignal das Einschalten des Abbiegelichtes. Erst nach Ablauf des Zeitintervalls von 7,5 min beginnt die Messung der Einschaltdauer (T_{EIN}) erneut, sodass bei zwei aufeinander folgenden Intervallen (T) mit einer Gesamtdauer von 15 min das Abbiegelicht maximal eine Einschaltdauer (T_{EIN}) von 3 min aufweist. Beispielsweise kann innerhalb eines Zeitintervalls das Abbiegelicht durch Setzen des Einschaltsignals nach 6 min erfolgen, sodass innerhalb dieses Zeitintervalls von 7,5 min die letzten 1,5 min das Abbiegelicht eingeschaltet bleibt. Nach Beendigung des Zeitintervalls beginnt das neue Zeitintervall, und das Abbiegelicht bleibt die ersten 1,5 min des nachfolgenden Zeitintervalls eingeschaltet. In Summe bleibt bei zeitlicher Folge beider Zeitintervalle das Abbiegelicht mit einer Einschaltdauer von 3 min dauerhaft eingeschaltet. Die Summe beider Zeitintervalle von 7,5 min bilden ein Zeitfenster von 15 min, innerhalb dessen das Abbiegelicht maximal 3 min eingeschaltet bleiben kann. Folglich sind die SAE-Spezifikationen erfüllt. Jedoch ist auch eine Steuerung möglich, bei der sowohl das Zeitintervall als auch die Einschaltdauer mit geringeren oder größeren Werten vorgegeben wird, um beispielsweise ECE-Spezifikationen erfüllen zu können.

Gemäß einer vorteilhaften Ausführungsform des erfindungsgemäßen Verfahrens werden das Einschaltsignal und/oder das Ausschaltsignal vom Fahrer des Kraftfahrzeugs vorgegeben. Hierbei kann das Einschaltsignal sowie das Ausschaltsignal durch den Schaltzustand eines Blinkers oder die Stellung einer Lenkung des Kraftfahrzeugs vorgegeben werden. Wird der Blinker in eine Fahrtrichtung gesetzt, so stellt das Setzen des Blinkers das Einschaltsignal dar und das Abbiegelicht wird auf der Seite des Kraftfahrzeugs aktiviert, auf der die vorliegende Kurvenfahrt erfolgt. Bei Beendigung der Kurvenfahrt wird der Blinker wieder zurückgesetzt, sodass das Zurücksetzen das Ausschaltsignal darstellt. Folglich wird über die Steuereinheit das Abbiegelicht wieder deaktiviert. Ebenso besteht die Möglichkeit, das Einschaltsignal mittels einer Sensorik an der Lenkung des Kraftfahrzeugs dann zum Einschalten des Abbiegelichtes zu aktivieren, wenn die Lenkung aus der Geradeausfahrt in einer Kurvenfahrt überführt wird. Das Abbiegelicht wird auf der Seite des Kraftfahrzeugs aktiviert, zu der die Lenkung einschlagen wird. Ist die Kurvenfahrt beendet, wird die Lenkung wieder in die Geradeausfahrt zurückgeführt, sodass durch die Sensorik in der Lenkung der Steuereinheit das Ausschaltsignal bereitgestellt wird, und das Abbiegelicht wird wieder ausgeschaltet. Somit wird dem Fahrer des Kraftfahrzeugs entweder direkt oder indirekt die Möglichkeit gegeben, das Einschaltsignal oder das Ausschaltsignal an die Steuereinheit zu liefern, um das Abbiegelicht entweder vor oder während der Kurve, in die der Fahrer das Kraftfahrzeug lenkt, ein- und auch wieder auszuschalten.

Besonders vorteilhaft ist eine Kombination des Einschaltsignals durch den Blinker und die Lenkung, sodass der Fahrer das Abbiegelicht schon durch Setzen des Blinkers aktivieren kann, die Sensorik in der Lenkung jedoch bei Lenkeinschlag spätestens bei Einbiegung in die Kurvenfahrt das Abbiegelicht einschaltet. Folglich ist beispielsweise vor Antritt einer Kurvenfahrt dem Fahrer die Möglichkeit gegeben, durch Setzen des Blinkers eine verbesserte Sicht in Richtung der Kurve zu erlangen, was beispielsweise beim Rechts- oder Linksabbiegen an einer Straßenkreuzung Vorteile bringt.

Gemäß einer weiteren Ausführungsform wird das Abbiegelicht durch die Steuereinheit bei Erreichen der maximalen Einschaltdauer (T_{EIN}) ausgeschaltet oder zumindest auf eine Teilleistung gedimmt, welche niedriger als die Nennleistung ist. Die Nennleistung stellt die maximale Leistung dar, mit der bei gewöhnlichem Betrieb des Abbiegelichtes die Scheinwerferanordnung betrieben wird. Zur Vermeidung der Schädigung der Scheinwerferanordnung kann das Abbiegelicht entweder vollständig ausgeschaltet oder wenigstens gedimmt werden. Das Dimmen kann durch die Steuereinheit erfolgen und sich über einen längeren Zeitraum erstrecken, sodass der Fahrer das Dimmen des Abbiegelichtes nicht unmittelbar wahrnimmt. Eine Temperaturüberhöhung der Scheinwerferanordnung kann jedoch durch eine gedimmte Ansteuerung der Scheinwerferanordnung mit einer Teilleistung, die sich durch das Dimmen ergibt, vermieden werden. Daher wird durch das Dimmen die gleiche Schutzfunktion wie durch ein Abschalten des Abbiegelichtes erreicht.

Aus technischen Gründen ist es besonders vorteilhaft, dass das Kraftfahrzeug ein Abblendlicht aufweist, wobei die Steuereinheit den Einschaltzustand des Abbiegelichtes erst bei eingeschaltetem Abblendlicht freigibt. Folglich wird das Abbiegelicht erst bei eingeschaltetem Abblendlicht aktiviert, was insbesondere bei Dunkelheit bzw. bei Nachtfahrten erfolgt. Somit kann ein Dauerbetrieb des Abbiegelichtes vermieden werden, da sich die Notwendigkeit des Abbiegelichtes bei Tagfahrten nicht ergibt. Eine Weiterbildung der Erfindung sieht vor, dass das Kraftfahrzeug eine sensorische Tag-Nachterkennung aufweist, und die Steuereinheit den Einschaltzustand des Abbiegelichtes nur bei Nacht freigibt. Die auch als Lichtsensor bekannte Tag-Nachterkennung ist bei vielen Fahrzeugen mit dem Abblendlicht gekoppelt, wobei erfindungsgemäß das Abbiegelicht auch eine eigene sensorische Tag-Nacherkennung aufweisen kann. Des Weiteren kann vorgesehen sein, bei Nachterkennung den Einschaltzustand zu verlängern.

Vorteilhafterweise weist das Kraftfahrzeug eine sensorische Außentemperaturerkennung auf, welche mit der Steuereinheit verbunden ist, wobei die Einschaltdauer (t_{EIN}) durch die Steuereinheit bei niedrigen Temperaturen und bei höheren Temperaturen verringert wird. Eine Überhitzung der Scheinwerferanordnung ist bei höheren Außentemperaturen eher gegeben, sodass über die Steuereinheit die maximale Einschaltdauer reduziert werden kann. Ist die Außentemperatur geringer, so ist die Wärmeabgabe an die Umgebung durch die Scheinwerferanordnung größer, sodass eine kritische Temperatur innerhalb der Scheinwerferanordnung weniger schnell erreicht wird. Folglich kann bei niedrigen Außentemperaturen die Einschaltdauer des Abbiegelichtes und damit der Energieeintrag in die Scheinwerferanordnung verlängert werden. Ebenso ist es möglich, in die Scheinwerferanordnung einen Temperatursensor zu integrieren, welcher die Temperatur in der Scheinwerferanordnung misst. Wird eine kritische Grenztemperatur erreicht, wird ein Ausschaltsignal erzeugt, welches an die Steuereinheit geliefert wird. Folglich wird das Abbiegelicht entweder ausgeschaltet oder wenigstens gedimmt, um den Energieeintrag zu beenden oder zu reduzieren und die Temperatur, die in der Scheinwerferanordnung erreicht wird, wieder zu reduzieren.

Innerhalb der Steuerung des Abbiegelichtes ist erfindungsgemäß ein Zeitspeicher vorgesehen, in den die Einschaltdauer (T_{EIN}) innerhalb jedes Zeitintervalls (T) summarisch abgelegt wird, wobei der Zeitspeicher nach Ablauf jedes Zeitintervalls (T) gelöscht wird. Der Zeitspeicher kann als einfacher Speicher in elektronischer Form ausgeführt sein, welcher innerhalb der Steuereinheit integriert wird.

Die vorliegende Erfindung ist ferner auf eine Vorrichtung zur Steuerung eines Abbiegelichtes eines Kraftfahrzeugs gerichtet, wobei wenigstens eine Scheinwerferanordnung zur Emittierung des Abbiegelichtes und ein Motorsteuergerät im Kraftfahrzeug vorgesehen ist, wobei ferner die Steuereinheit entweder in der Scheinwerferanordnung oder im Motorsteuergerät angeordnet ist.

Weitere, die Erfindung verbessernde Maßnahmen werden nachstehend mit der Beschreibung eines beispielhaften Zeitdiagramms mit dem periodisch sich wiederholenden Zeitintervall sowie der Einschaltdauer des Abbiegelichtes beschrieben. Es zeigen:
- Fig. 1: ein Zeitdiagramm des Ein- und Ausschaltzustands eines Abbiegelichtes, welches durch eine Steuerung gemäß der vorliegenden Erfindung gesteuert wird und
- Fig. 2: ein Zeitdiagramm des Ein- und Ausschaltzustands eines Abbiegelichtes mit einer Dimmfunktion.

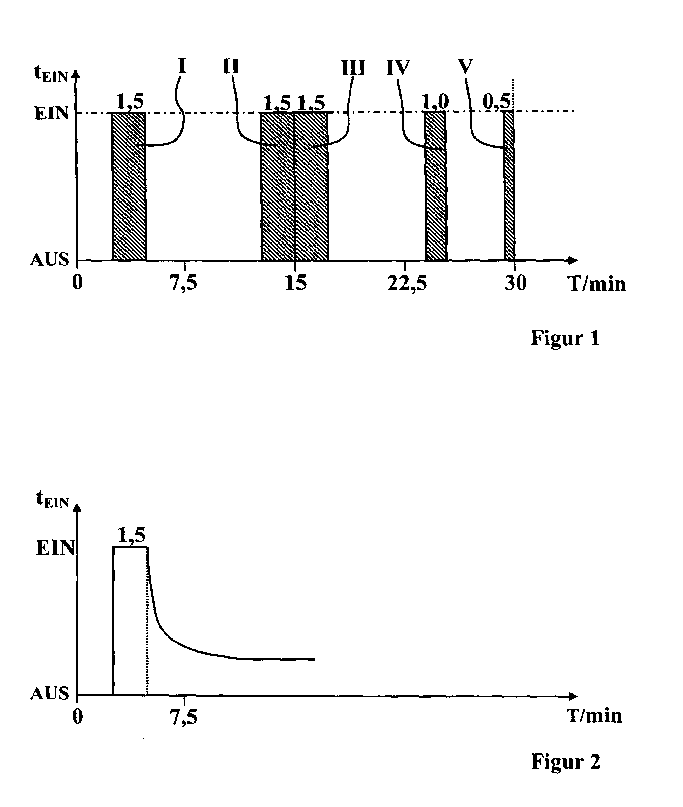

In Figur 1 ist ein Zeitdiagramm dargestellt, in dem der Ein- und Ausschaltzustand über der Zeit wiedergegeben ist. Die Zeitachse ist unterteilt in mehrere periodisch aufeinander folgende Zeitintervalle (T), wobei das einzelne Zeitintervall mit einer Länge von 7,5 min angegeben ist. Innerhalb des ersten Zeitintervalls ist eine erste Einschaltdauer I dargestellt, welche eine Dauer von 1,5 min aufweist und innerhalb des ersten Zeitintervalls (T) abläuft. Eine zweite Einschaltdauer II ist innerhalb des zweiten Zeitintervalls dargestellt, welches am zeitlichen Ende des zweiten Intervalls liegt. Auf das zweite Intervall folgt das dritte Zeitintervall, wobei eine Einschaltdauer III zu Beginn des dritten Zeitintervalls gelegen ist. Folglich bilden die zweite Einschaltdauer II und die dritte Einschaltdauer III eine gemeinsame Einschaltdauer 11-III mit einer Dauer von 3 min. Damit wird verdeutlicht, dass mit der erfindungsgemäßen Steuerung und der Aufteilung der Zeitintervalle von 7,5 min und einer maximalen Einschaltdauer von 1,5 min innerhalb jedes der Zeitintervalle die Einschaltdauer innerhalb von 15 min von 3 min nicht übersteigen kann, und die maximale Einschaltdauer durch zwei hintereinander gelegene einzelne Einschaltdauern (II-III) ebenfalls die maximal zulässige Einschaltdauer von 3 min nicht übersteigt. Beispielhaft ist innerhalb des vierten Zeitintervalls von 22,5 min bis 30 min dargestellt, dass die Einschaltdauer nicht kontinuierlich am Stück von 1,5 min erreicht werden muss, sondern summarisch durch die Steuereinheit berechnet wird. Eine Einschaltdauer IV von 1 min erfolgt mit einer Beendigung durch ein Ausschaltsignal, welches durch den Fahrer des Kraftfahrzeugs verursacht wird. Bei einer erneuten Betätigung des Abbiegelichtes, welche zwar ein Beginn durch ein Einschaltsignal aufweist, dass durch den Fahrer gesetzt wird, jedoch kein weiteres Ausschaltsignal erfolgt, beendet die Steuereinheit das fünfte Einschaltsignal selbsttätig bei 30 sek., sodass innerhalb des vierten Zeitintervalls die maximale Einschaltdauer von 1,0 min. + 0,5 min. = 1,5 min erreicht und limitiert wird.

In Figur 2 ist wie bereits in Figur 1 der Ein- und Ausschaltzustand des Abbiegelichtes über der Zeit dargestellt. Die Zeitachse weist ein Zeitintervall von 7,5 min auf. Innerhalb des Zeitintervalls wird durch ein Einschaltsignal eine Einschaltdauer von 1,5 min erreicht, wobei die Steuerung nicht ein Ausschaltsignal selbsttätig folgen lässt, um die Einschaltdauer auf 1,5 min zu limitieren, sondern es folgt eine Dimmung des Abbiegelichtes auf eine Teilleistung, die geringer als die Nennleistung ist. Somit ist zwar ein Abbiegelicht noch vorhanden, jedoch wird dieses nicht mehr mit der vollen Leistung betrieben, sondern zum Schutz der Scheinwerferanordnung des Abbiegelichtes erfolgt der Betrieb lediglich mit einer Teilleistung. Hierbei kann die Dimmfunktion auch mit einer direkten Ausschaltfunktion durch die Steuereinheit gekoppelt werden.

Die Erfindung beschränkt sich in Ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- EIN: Einschaltzustand des Abbiegelichtes
- AUS: Ausschaltzustand des Abbiegelichtes
- T: Zeitintervall (7,5min.)
- t_{EIN}: Einschaltdauer
- I: erste Einschaltdauer
- II: zweite Einschaltdauer
- III: dritte Einschaltdauer
- IV: vierte Einschaltdauer
- V: fünfte Einschaltdauer

## Patentansprüche

1. Verfahren zur Steuerung eines Abbiegelichtes eines Kraftfahrzeugs, das durch ein Einschaltsignal eingeschaltet und durch ein Ausschaltsignal wieder ausgeschaltet wird, wobei eine Steuereinheit zur Steuerung des Ein- und Ausschaltzustandes des Abbiegelichtes vorgesehen ist,
**dadurch gekennzeichnet, dass** der Steuereinheit ein sich periodisch wiederholendes Zeitintervall (T) und eine maximale Einschaltdauer (T_{EIN}) des Abbiegelichtes innerhalb des Zeitintervalls (T) vorgegeben wird, wobei die Steuereinheit bei Erreichen der maximalen Einschaltdauer (T_{EIN}) das Abbiegelicht vor dem Zeitpunkt des Ausschaltsignals zumindest auf eine Teilleistung reduziert und wobei ein Zeitspeicher vorgesehen ist, in den die Einschaltdauer (T_{EIN}) innerhalb jedes Zeitintervalls (T) summarisch abgelegt wird, wobei der Zeitspeicher nach Ablauf jedes Zeitintervalls (T) gelöscht wird.

2. Verfahren nach Anspruch 1, **dadurch gekennzeichnet, dass** das sich periodisch wiederholende Zeitintervall (T) mit einer Zeitdauer von 4min bis 15min, vorzugsweise von 5min bis 10min und besonders bevorzugt von 7,5min in der Steuereinheit vorgegeben wird.

3. Verfahren nach Anspruch 1 oder 2, **dadurch gekennzeichnet, dass** die Einschaltdauer (t_{EIN}) mit einer Zeitdauer von 0,5min bis 3,5min, vorzugsweise von 1 min bis 2,5min und besonders bevorzugt von 1,5min in der Steuereinheit vorgegeben wird.

4. Verfahren nach Anspruch 1 bis 3, **dadurch gekennzeichnet, dass** das Einschaltsignal und/oder das Ausschaltsignal vom Fahrer des Kraftfahrzeugs vorgegeben wird.

5. Verfahren nach einem der vorgenannten Ansprüche, **dadurch gekennzeichnet dass** das Einschaltsignal und/oder das Ausschaltsignal durch den Schaltzustand eines Blinkers oder die Stellung einer Lenkung des Kraftfahrzeugs vorgegeben wird.

6. Verfahren nach einem der vorgenannten Ansprüche, **dadurch gekennzeichnet, dass** das Einschaltsignal durch ein Setzen des Blinkers oder durch eine für eine Kurvenfahrt eingeschlagene Lenkung und das Ausschaltsignal durch ein Zurücksetzen des Blinkers oder durch eine in eine Geradeausfahrt zurückgeführte Lenkung der Steuereinheit vorgegeben wird.

7. Verfahren nach einem der vorgenannten Ansprüche, **dadurch gekennzeichnet dass** das Abbiegelicht durch die Steuereinheit bei Erreichen der maximalen Einschaltdauer (t_{EIN}) ausgeschaltet oder auf eine Teilleistung gedimmt wird, die niedriger als die Nennleistung ist.

8. Verfahren nach einem der vorgenannten Ansprüche, **dadurch gekennzeichnet dass** das Kraftfahrzeug ein Abblendlicht aufweist, wobei die Steuereinheit den Einschaltzustand des Abbiegelichtes erst bei eingeschaltetem Abblendlicht freigibt.

9. Verfahren nach einem der vorgenannten Ansprüche, **dadurch gekennzeichnet dass** das Kraftfahrzeug eine sensorische Tag-Nachterkennung aufweist, und die Steuereinheit den Einschaltzustand des Abbiegelichtes nur bei Nacht freigibt oder bei Nacht verlängert.

10. Verfahren nach einem der vorgenannten Ansprüche, **dadurch gekennzeichnet dass** das Kraftfahrzeug eine sensorische Außentemperaturerkennung aufweist, welche mit der Steuereinheit verbunden ist, und die Einschaltdauer (T_{EIN}) durch die Steuereinheit bei niedrigen Temperaturen verlängert und bei höheren Temperaturen verringert wird.

11. Vorrichtung zur Steuerung eines Abbiegelichtes eines Kraftfahrzeugs mittels eines Verfahrens nach einem der vorgenannten Ansprüche, **dadurch gekennzeichnet, dass** wenigstens eine Scheinwerferanordnung zur Emittierung des Abbiegelichtes und ein Motorsteuergerät im Kraftfahrzeug vorgesehen ist, und die Steuereinheit in der Scheinwerferanordnung oder im Motorsteuergerät angeordnet ist.

## Claims

1. Process for controlling the fixed bending light on a motor vehicle, which is activated by a switch-on signal and deactivated again by a switch-off signal, with a control unit provided to control the switched on or switched off state of the fixed bending light, **characterized by** the fact that a periodically recurring time interval (T) and a maximum switch-on time (t_{ON}) for the fixed bending light within the time interval (T) are defined for the control unit, whereby the control unit at least reduces the fixed bending light to partial power once the maximum switch-on time (t_{ON}) is reached and before the switch-off signal is timed to activate, and whereby a time buffer is provided where the switch-on time (t_{ON}) within each time interval (T) is cumulatively stored, whereby the time buffer is reset to zero after each time interval (T) has expired.

2. Process as defined in Claim 1, **characterized by** the fact that the periodically recurring time interval (T) is defined in the control unit with a duration of 4min to 15min, preferably of 5min to10min and particularly preferably of 7.5min.

3. Process as defined in Claim 1 or 2, **characterized by** the fact that the switch-on time (t_{ON}) is defined in the control unit with a duration of 0.5min to 3.5min, preferably of 1 min to 2.5min and particularly preferably of 1.5min.

4. Process as defined in Claims 1 through 3, **characterized by** the fact that the switch-on and/or switch-off signal is triggered by the driver of the motor vehicle.

5. Process as defined in one of the aforementioned Claims, **characterized by** the fact that the switch state of an indicator or the steering position of the motor vehicle activates the switch-on and/or switch-off signal.

6. Process as defined in one of the aforementioned Claims, **characterized by** the fact that the control unit triggers the switch-on signal when the indicator is turned on or the steering turned to maneuver a curve, and the switch-off signal when the indicator is turned off or the steering returns to driving straight ahead.

7. Process as defined in one of the aforementioned Claims, **characterized by** the fact that the fixed bending light is switched off or dimmed to a partial power level that is less than the nominal power level by the control unit once the maximum switch-on time (t_{ON}) is reached.

8. Process as defined in one of the aforementioned Claims, **characterized by** the fact that the motor vehicle is fitted with a fixed bending light, whereby the control unit does not release the switch-on state of the fixed bending light unless the low beam light is switched on.

9. Process as defined in one of the aforementioned Claims, **characterized by** the fact that the motor vehicle is fitted with a daylight/night detection sensor and the control unit only releases or extends the switch-on state of the fixed bending light at night.

10. Process as defined in one of the aforementioned Claims, **characterized by** the fact that the motor vehicle is fitted with an external temperature detection sensor that is connected to the control unit, and the control unit extends the switch-on time (t_{ON}) at lower temperatures and reduces it at higher temperatures.

11. Fixture for controlling a fixed bending light on a motor vehicle using a process as defined in one of the aforementioned Claims, **characterized by** the fact that at least one of the headlight configurations is equipped to emit a fixed bending light, that the motor vehicle is equipped with an engine control unit, and that the control unit is arranged in the headlight configuration or the engine control unit.

## Revendications

1. Procédure de commande d'un feu de virage d'un véhicule automobile qui sera allumé par un signal d'allumage et éteint par un signal d'extinction, avec une unité de commande prévue pour commander l'état d'allumage et d'extinction du feu de virage, **caractérisée en ce qu'**un intervalle de temps (T) à répétition périodique et une durée d'allumage maximale (t_{ALL}) du feu de virage dans un intervalle de temps (T) seront imposés à l'unité de commande, l'unité de commande réduisant la puissance du feu de virage au moins à une puissance partielle avant le moment du signal d'extinction lorsque le temps d'allumage maximale (T_{ALL}) est atteinte et avec une mémoire de temps prévue dans laquelle le temps d'allumage (T_{ALL}) dans un intervalle de temps (T) sera mémorisé sommairement, la mémoire de temps étant effacée après l'expiration de chaque intervalle de temps (T).

2. Procédure selon la revendication 1, **caractérisée en ce que** l'intervalle de temps (T) à répétition périodique sera imposé dans l'unité de commande avec une durée de 4 minutes à 15 minutes, de préférence de 5 minutes à 10 minutes, et spécialement favorisée de 7,5 minutes.

3. Procédure selon la revendication 1 ou 2, **caractérisée en ce que** le temps d'allumage (t_{ALL}) sera imposé dans l'unité de commande avec une durée de 0,5 minutes à 3,5 minutes, de préférence de 1 minute à 2,5 minutes et spécialement favorisée de 1,5 minutes.

4. Procédure selon une des revendications 1 à 3, **caractérisée en ce que** le signal d'allumage et/ou le signal d'extinction sera imposé par le conducteur du véhicule automobile.

5. Procédure selon une des revendications précitées, **caractérisée en ce que** le signal d'allumage et/ou le signal d'extinction sera imposé par l'état de commande d'un feu clignotant ou par la position du volant du véhicule automobile.

6. Procédure selon une des revendications précitées, **caractérisée en ce que** le signal d'allumage sera imposé à l'unité de commande par la mise d'un clignotant ou par le volant tourné dans les virages et le signal d'extinction sera imposé à l'unité de commande par la remise du clignotant ou par le volant retourné dans la position droite.

7. Procédure selon une des revendications précitées, **caractérisée en ce que** le feu de virage sera éteint par l'unité de commande lorsque la durée d'allumage maximale (t_{ALL}) est atteinte ou sera atténué par celle-ci à une puissance partielle qui sera inférieure à la puissance nominale.

8. Procédure selon une des revendications précitées, **caractérisée en ce que** le véhicule automobile présente un feu code, l'unité de commande autorisant l'état d'allumage du feu de virage uniquement lorsque le feu code est allumé.

9. Procédure selon une des revendications précitées, **caractérisée en ce que** le véhicule automobile présente une identification jour/nuit à capteur et l'unité de commande n'autorise l'état d'allumage du feu de virage que pendant la nuit ou prolonge celui-ci pendant la nuit.

10. Procédure selon une des revendications précitées, **caractérisée en ce que** le véhicule automobile présente un indicateur de température extérieure à capteur qui sera relié avec l'unité de commande et le temps d'allumage (T_{ALL}) sera prolongé à basse température et le temps d'allumage (t_{ALL}) sera réduit à haute température par l'unité de commande.

11. Installation pour commander un feu de virage d'un véhicule automobile à l'aide d'un processus selon une des revendications précitées **caractérisée en ce qu'**au moins une disposition de projecteurs pour émettre le feu code et un boîtier de servitude moteur sont prévus au véhicule automobile et que l'unité de commande sera disposée dans la disposition de projecteurs ou dans le boîtier de servitude moteur.
